# EUROPÄISCHE PATENTSCHRIFT

(11) **EP 2 143 518 B1**
(45) Veröffentlichungstag und Bekanntmachung des Hinweises auf die Patenterteilung: **04.04.2012**
(21) Anmeldenummer: 09006616.8
(22) Anmeldetag: 15.05.2009
(51) Int. Cl.: B23K 26/06, B23K 26/067, B23K 26/08

(54) **Laserbearbeitungsvorrichtung und Laserbearbeitungsverfahren mit Doppel-oder Mehrfachspot mittels eines Galvanoscanners**
Laser processing device and laser processing method with double or multiple spot using a galvano scanner
Dispositif de traitement laser et procédé de traitement laser doté d'un point focal double ou multiple à l'aide d'un scanner galvanométrique

(30) Priorität: 11.07.2008 DE 102008032751
(43) Veröffentlichungstag der Anmeldung: 13.01.2010
(73) Patentinhaber: INNOLAS SYSTEMS GmbH, 82152 Krailling (DE)
(72) Erfinder: Becker, Alex, 82131 Stockdorf (DE)
(74) Vertreter: Pfenning, Meinig & Partner GbR

(56) Entgegenhaltungen:
- WO-A2-02/34446
- US-A1- 2002 196 534

## Beschreibung

Die vorliegende Erfindung bezieht sich auf eine Laserbearbeitungsvorrichtung und auf ein Laserbearbeitungsverfahren zur Laserbearbeitung von Werkstücken, insbesondere von flächigen Werkstücken wie beispielsweise Solarzellenelementen (beispielsweise: Dünnschicht-Solarzellenelemente).

Entsprechende Bearbeitungsvorrichtungen bzw. Bearbeitungsverfahren sind aus dem Stand der Technik bereits bekannt: Der Laserstrahl eines Lasers bzw. die Laserstrahlen mehrerer Laser werden dabei über ein Strahlführungssystem auf das zu bearbeitende Werkstück gelenkt, wo sie für den gewünschten Materialabtrag sorgen. Um die Position des Materialabtrages auf der Oberfläche des Werkstückes definiert festzulegen, wird als letztes Element der Strahlführung in der Regel ein sog. Galvanoscanner eingesetzt.

Solche Galvanoscanner sind aus dem Stand der Technik bekannt. So beschreibt beispielsweise die EP 1 480 045 A1 einen Motor für einen solchen Galvanoscanner. Galvanoscanner sind Vorrichtungen, die mittels Galvanometerantrieben (Galvoantrieb oder Galvo) zur schnellen Positionierung und Winkelverstellung bei einem Spiegelantrieb für die Laserstrahlablenkung eingesetzt werden.

Aus dem Stand der Technik (US 2002/0196534 A1) ist darüber hinaus eine Laserbearbeitungsvorrichtung bekannt, bei der drei separate Laserstrahlen auf einen ersten Ablenkspiegel eines ersten Galvanometers und zu einem zweiten Ablenkspiegel eines zweiten Galvanometers gelenkt werden. Die drei Strahlen werden dann danach über eine Fokussierlinse auf drei unterschiedliche Objekte, die zu bearbeiten sind, gelenkt, um die Bearbeitung der drei separaten Objekte zu vereinfachen.

Die im Rahmen des vorliegenden technischen Gebietes und somit auch im Rahmen der vorliegenden Erfindung zum Einsatz kommenden Galvanoscanner weisen zwei Ablenkspiegel auf, die für die Ablenkung des Laserstrahls und für die Positionierung desselben in der xy-Ebene (Oberfläche des Werkstückes, die zu bearbeiten ist) sorgen. Die beiden Spiegel des Galvanoscanners sind dabei beweglich, d.h. drehbar bzw. rotierbar um eine Achse ausgeführt (dies geschieht mit Hilfe der oben genannten Scannermotoren). Der erste bewegliche Spiegel ist hierbei um eine erste Achse drehbar, der zweite bewegliche Spiegel ist um eine zweite Achse drehbar. Die beiden Achsen stehen senkrecht zueinander und weisen einen Abstand voneinander auf.

Oft wird der abzulenkende Laserstrahl den beiden beweglichen Spiegeln über einen vorgeschalteten dritten Spiegel, der fest im Raum (d.h. nicht drehbar) angeordnet ist, zugeführt. Der von diesem vorgeschalteten dritten Spiegel reflektierte Laserstrahl wird dann zunächst auf den ersten beweglichen Spiegel gestrahlt, dort entsprechend der Winkelstellung des ersten Spiegels auf den zweiten beweglichen Spiegel reflektiert und dort erneut reflektiert und schließlich entsprechend der Winkelstellung des zweiten Spiegels auf die gewünschte Position des zu bearbeitenden Werkstückes eingestrahlt.

Aus dem Stand der Technik sind nun Laserbearbeitungsvorrichtungen bzw. -verfahren bekannt, bei denen der Laserstrahl auf einen Strahlteiler geleitet wird und dort in zwei (oder auch mehr) Einzelstrahlen aufgeteilt wird. Jeder dieser Einzelstrahlen wird dann auf einen separaten Galvoscanner geleitet. Dies ermöglicht, das zu bearbeitende Werkstück unter Einsatz mehrerer Galvoscanner gleichzeitig mit zwei (oder mehr) Laserstrahlen an unterschiedlichen Werkstückpositionen zu strukturieren.

Insbesondere Laserprozesse, die eine hohe Flächenleistung brauchen, leiden jedoch oft an der Möglichkeit, mehrere Prozesse parallel ablaufen zu lassen. Die beschriebenen Strahlteilungslösungen sind zwar grundsätzlich einsetzbar, scheitern in der Praxis jedoch oft daran, dass nicht genügend Einbauraum zur Verfügung steht. Zudem ist es aufwändig und wirtschaftlich ungünstig, die entsprechenden Optiken zur Strahlbewegung (Galvoscanner) mehrfach aufbauen zu müssen.

Die Aufgabe der vorliegenden Erfindung ist es daher, eine Laserbearbeitungsvorrichtung und ein Laserbearbeitungsverfahren zur Verfügung zu stellen, bei denen eine parallele (bzw. eine mehrfache) Bearbeitung eines Werkstückes mit mehreren Laserstrahlen mit geringem apparativem Aufwand und auf engem Raum (insbesondere also auch bei Laserprozessen, die eine hohe Flächenleistung brauchen) möglich ist.

Die vorliegende Aufgabe wird durch die Laserbearbeitungsvorrichtung gemäß Patentanspruch 1 und das Laserbearbeitungsverfahren gemäß Anspruch 13 gelöst. Vorteilhafte Ausgestaltungsformen ergeben sich jeweils entsprechend der abhängigen Ansprüche. Erfindungsgemäße Verwendungen sind in Anspruch 15 beschrieben.

Die grundlegende Lösungsidee der vorliegenden Erfindung basiert darauf, einen bereits aufgeteilten Laserstrahl (bzw. zwei oder mehrere Laserstrahlen, die gegebenenfalls auch durch unterschiedliche Laser erzeugt werden) gemeinsam mit einem einzigen Galvoscanner zu nutzen.

Wesentlicher Aspekt ist hierbei, für die mehreren (insbesondere: die zwei) auf den einzelnen Galvoscanner eingestrahlten Laserstrahlen bzw. Teilstrahlen einen Strahlverlauf so zu realisieren, dass die mehreren Laserstrahlen die Strahlumlenkoptik des Galvoscanners unabhängig von der momentanen Position der beiden beweglichen Ablenkspiegel des Galvoscanners in konstantem Abstand voneinander und/oder so verlassen, dass auf der zu bearbeitenden Oberfläche des Werkstückes die mehreren Laserspots in konstantem Abstand zueinander auftreffen (dieser konstante Auftreffabstand zueinander darf nicht nur in einigen wenigen Punkten auf der zu bearbeitenden Oberfläche realisiert sein, sondern es muss sich eine parallele Spurführung der mehreren Laserspots über den gesamten Ablenkbereich bzw. Drehwinkelbereich der Spiegel des Galvoscanners ergeben).

Um dies zu realisieren, müssen die Laserstrahl-Erzeugungs- und Führungseinheit (also der Laser und die nachfolgenden optischen Elemente) sowie der Galvanoscanner so ausgebildet, angeordnet und ausgerichtet werden, dass die beiden (oder mehreren) Teilstrahlen auf der Eingangsseite so in ein und demselben Galvanoscanner eingestrahlt werden bzw. so auf den ersten, noch feststehenden Spiegel des Galvanoscanners eingestrahlt werden), dass sie sich nach der Reflexion am ersten beweglichen Spiegel des Galvanoscanners und vor der Reflexion am zweiten beweglichen Spiegel des Galvanoscanners, also zwischen den beiden beweglichen Spiegeln des Galvanoscanners, in genau einem definierten Punkt (Kreuzungspunkt) kreuzen. Dieser genau definierte Kreuzungspunkt wird so festgelegt, dass er sich genau in der Mitte zwischen den beiden beweglichen Spiegeln des Galvanoscanners befindet. Genauer gesagt, befindet sich der Kreuzungspunkt genau auf der Mitte derjenigen Verbindungslinie, welche die beiden Drehachsen der beiden beweglichen Drehspiegel des Galvanoscanners miteinander so verbindet, dass sie auf beiden Drehachsen senkrecht steht.

Auf diese Art und Weise wird mit der vorliegenden Erfindung ein Lösungsansatz dahingehend realisiert, dass ein aufgeteilter Strahl auf eine Art und Weise über einen einzelnen Galvanoscanner geführt wird, die über den vom Galvanoscanner nutzbaren Bearbeitungsbereich einen konstanten Spurabstand der beiden oder mehreren Strahlen voneinander realisiert. Wie nachfolgend noch genauer beschrieben, wird dabei durch geeignete Verschiebung der wesentlichen Elemente im Strahlengang auch eine ausreichende Flexibilität der Spurbreite realisierbar (variable Spurabstände).

Nachfolgend wird die Erfindung nun anhand mehrerer Ausführungsbeispiele beschrieben.

Es zeigen:
- Figur 1: eine erste Ausführungsform der vorliegenden Erfindung auf Basis eines einzelnen Lasers mit einer Strahlteilungsoptik;
- Figur 2: ein zweites Ausführungsbeispiel, welches dem in Figur 1 gezeigten Ausführungsbei- spiel entspricht, jedoch mit drei Teil- strahlen arbeitet;
- Figur 3: Die wesentlichen Elemente des bei den bei- den ersten Ausführungsbeispielen eingesetz- ten Einzel-Galvanoscanners;
- Figur 4: ein drittes Ausführungsbeispiel der vorlie- genden Erfindung, welches mit zwei einzel- nen Lasern arbeitet.

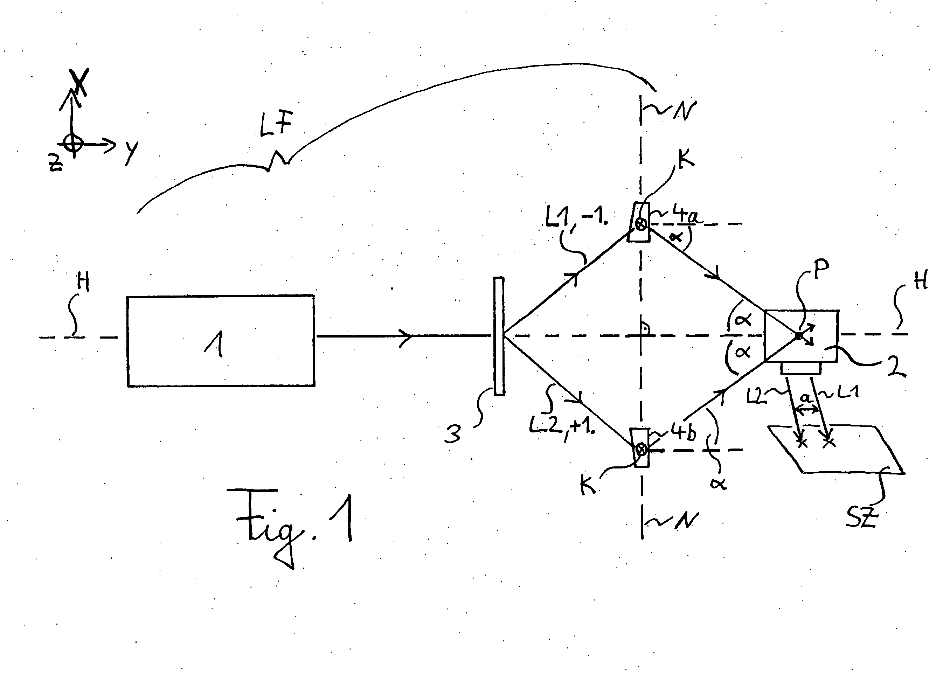

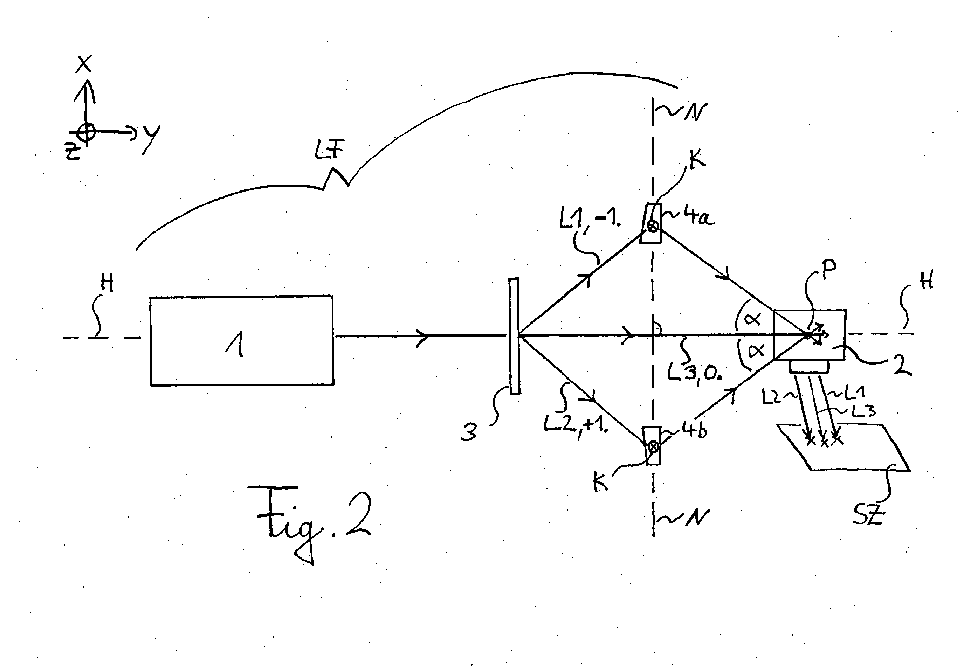

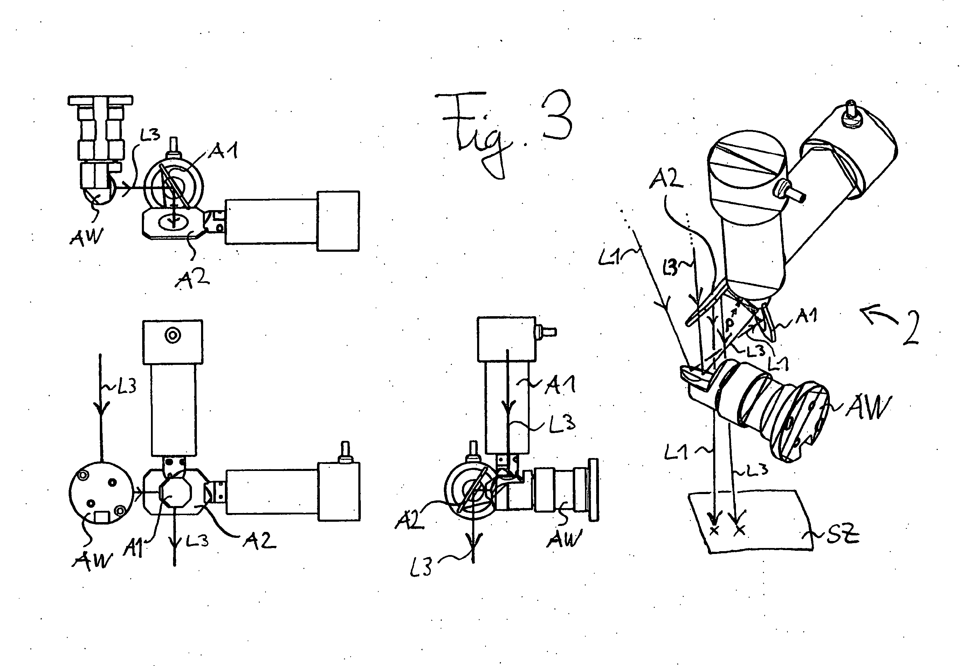

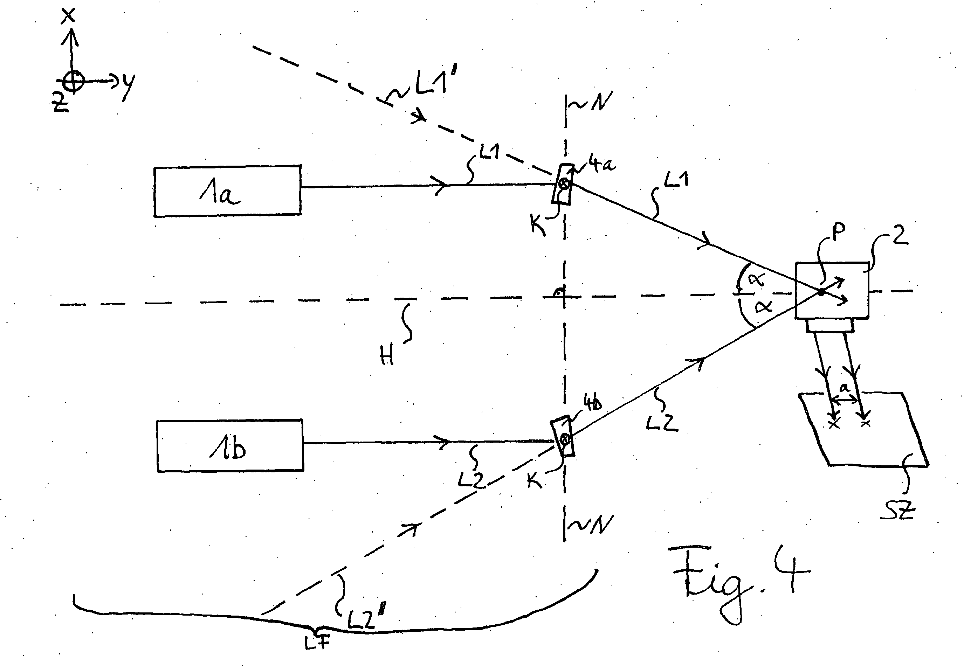

Figur 1 zeigt eine Aufsicht auf die Einstrahlebene (xy-Ebene im kartesischen Koordinatensystem x,y,z). Die Einstrahlebene ist diejenige Strahlebene, in der die nachfolgend beschriebenen Laserstrahlen L1 und L2 (sowie der vom Laser erzeugte Laserstrahl vor seiner Auftrennung) verlaufen, bis die beiden Laserstrahlen L1, L2 im Galvanoscanner das erste Mal abgelenkt werden (vgl. Figur 3). Der Strahlengang im Galvanoscanner und danach ist in dieser Figur (Dies gilt ebenso für die Figuren 2 und 4) nur schematisch dargestellt.

Die Laserbearbeitungsvorrichtung gemäß Figur 1 weist eine aus den Elementen 1, 3 und 4a, 4b, bestehende Laserstrahlerzeugungs- und -Führungseinheit LF auf. Diese umfasst zunächst einen Laser 1, mit welchem entlang einer ersten Achse (Hauptstrahlachse H in y-Richtung der Einfallsebene) ein Laserstrahl erzeugt und ausgestrahlt wird. Dieser Laserstrahl trifft auf einen Strahlteiler 3, der zentrisch auf der Hauptstrahlachse H angeordnet ist. Bei diesem handelt es sich im vorliegenden Fall um einen diffraktiven Strahlteiler (optisches Gitter). Grundsätzlich können jedoch auch refraktive Strahlteiler, wie beispielsweise Prismen, eingesetzt werden, um den einfallenden Laserstrahl in mehrere (hier: zwei) Laserstrahlen L1, L2 aufzuteilen.

Im vorliegenden Fall ist der Strahlteiler 3 so ausgebildet, positioniert und ausgerichtet, dass vom einfallenden Laserstrahl lediglich die beiden ersten Beugungsordnungen (-1. -te Beugungsordnung und +1. -te Beugungsordnung) als aufgeteilte Laserstrahlen verbleiben. Die -1. -te Beugungsordnung wird dabei als erster Laserstrahl L1 genutzt, die +1. -te Beugungsordnung als zweiter Laserstrahl L2. Die beiden Laserstrahlen werden durch das optische Gitter so aufgeteilt, dass sie in der xy-Ebene beidseits der Hauptstrahlachse H symmetrisch von dieser wegführen.

In Richtung der Hauptstrahlachse H gesehen beabstandet von und in Einstrahlrichtung hinter dem Strahlteiler 3 sind auf einer zweiten Achse (Nebenachse N senkrecht zur Hauptstrahlrichtung H und in x-Richtung der Einfallsebene) zwei Strahlumlenkelemente 4a und 4b einer Strahlumlenkeinheit 4 angeordnet. Die beiden Strahlumlenkelemente 4a und 4b sind dabei beidseits der Hauptstrahlrichtung H symmetrisch angeordnet, d.h. ihr Abstand zur Hauptstrahlachse H ist jeweils derselbe. Die beiden Strahlumlenkelemente 4a, 4b sind beidseits der Hauptstrahlachse H so auf der Nebenachse N positioniert, ausgerichtet und ausgebildet, dass mit ihnen die beiden aufgrund des Strahlteilers 3 auseinander laufenden Laserstrahlen L1, L2 wieder zusammengeführt werden, d.h. auf einen gemeinsamen Raumpunkt, den Kreuzungspunkt P, gelenkt werden. Das erste Strahlumlenkelement 4a lenkt hierbei den ersten Laserstrahl L1 so um, dass er sich im Raumpunkt P mit dem Laserstrahl L2, der durch das zweite Strahlumlenkelement 4b umgelenkt wurde, kreuzt. Strahleinfallsseitig des Kreuzungspunktes P entsteht so in der Einfallsebene (xy-Ebene) der im Bild gezeigte näherungsweise rautenförmige Strahlverlauf.

Wie die nachfolgende Figur 3 (die die wesentlichen Elemente des in Figur 1 verwendeten Galvanoscanners 2 zeigt) noch genauer beschreibt, ist im Strahlengang der beiden Laserstrahlen L1, L2 ein Galvanoscanner 2 so ausgebildet und angeordnet, dass der vorbeschriebene Kreuzungspunkt P genau in der Mitte zwischen den beiden beweglichen Spiegeln (Ablenkspiegeln) des Galvanoscanners 2 liegt. Genauer gesagt liegt der Kreuzungspunkt P genau auf der Mitte derjenigen Verbindungslinie der beiden Rotationsachsen der beweglichen Ablenkspiegel des Galvanoscanners 2, die senkrecht auf diesen beiden Rotationsachsen steht. Die beiden Strahlumlenkelemente 4a, 4b sind somit so angeordnet und ausgerichtet, dass die durch sie umgelenkten Laserstrahlen L1, L2 so auf den feststehenden Eingangsspiegel (siehe Figur 3) des Galvanoscanners eingestrahlt werden, dass sie sich nach ihrer Reflexion an diesem Eingangsspiegel sowie dem ersten beweglichen Ablenkspiegel des Galvanoscanners genau in dem vorbeschriebenen Punkt P kreuzen, bevor sie, nach erneuter Reflexion am zweiten beweglichen Ablenkspiegel des Galvanoscanners, diesen strahlausgangsseitig in einem definierten Winkel verlassen (siehe Skizze rechts in Figur 1). Nach dem Galvoscanner (bzw. als in Strahlrichtung gesehen letztes Bauelement des Galvoscanners) ist eine Fokussiereinheit ausgebildet, auf die die Laserstrahlen unter diesem definierten Winkel einfallen und durch die die Laserstrahlen so abgelenkt werden, dass sie nach der Fokussiereinheit einen definierten Abstand a aufweisen. Die beiden den Galvanoscanner 2 im definierten Winkel verlassenden, durch den Galvanoscanner umgelenkten Laserstrahlen L1 und L2 werden auf das zu bearbeitende Werkstück, hier ein Dünnschicht-Solarzellenelement SZ fokussiert. Die beiden Strahlen treffen somit im Abstand a zueinander auf die Oberfläche des Dünnschicht-Solarzellenelementes und bewirken dort einen gewünschten Materialabtrag (beispielsweise zur Ausbildung von Trenngräben zwischen den einzelnen frontseitigen oder rückseitigen Kontakten des Solarzellenelementes).

Da die Anordnung, Ausbildung und Ausrichtung sämtlicher verwendeter optischer Elemente im vorbeschriebenen Strahlengang so erfolgt, dass sich die beiden symmetrisch auf den Galvanoscanner 2 einfallenden Strahlen L1, L2 genau in dem Mittelpunkt zwischen den beiden beweglichen Ablenkspiegeln des Galvanoscanners 2 kreuzen, wird nicht nur für eine bestimmte Winkelstellung der Ablenkspiegel des Galvoscanners 2 ein Auftreffen der beiden Laserstrahlen L1, L2 im Abstand a voneinander auf der Oberfläche des zu bearbeitenden Solarzellenelementes realisiert, sondern für alle Winkelstellungen der Ablenkspiegel bzw. über den gesamten Ablenkbereich (Drehwinkelbereich der beiden Ablenkspiegel des Galvanoscanners). Es lässt sich also ein konstanter Abstand a der beiden Laserstrahlen L1, L2 über den gesamten Ablenkbereich realisiert, so dass sich auf der Oberfläche des Solarzellenelementes beim Betrieb des Galvanoscanners 2 bzw. bei geeigneter Drehung der Ablenkspiegel des Galvanoscanners parallele Materialabtragsspuren bzw. Gräben realisieren lassen.

Der bei Drehung der Ablenkspiegel konstant bleibende Spurabstand a dieser beiden Spuren auf der Oberfläche des Solarzellenelementes SZ kann nun wie folgt variiert bzw. eingestellt werden bzw. konstant gehalten werden: Die beiden Strahlumlenkelemente 4a, 4b sind entlang der Nebenachse N verschieblich ausgebildet. D.h. die beiden Elemente 4a und 4b können entweder aufeinander zugeschoben werden (Verringerung des Abstandes der beiden Elemente zur Hauptstrahlachse H) oder sie können voneinander weg geschoben werden (Vergrößerung des Abstandes zu der Hauptstrahlachse H). Hierdurch ändert sich der Winkel α, mit dem die beiden durch die Elemente 4a, 4b umgelenkten Laserstrahlen L1, L2 auf den Galvanoscanner einfallen (Winkel α = Winkel zwischen der Hauptstrahlachse H und jedem dieser beiden durch die Elemente 4a, 4b umgelenkten Laserstrahlen L1, L2). Natürlich müssen die verschobenen Elemente 4a, 4b ggf. entsprechend gedreht werden, damit sich die Strahlen L1, L2 nach wie vor in dem gemeinsamen Punkt P kreuzen. Eine Verkleinerung des Einfallswinkels α sorgt für eine Verkleinerung des Spurabstandes a. Eine Vergrößerung des Winkels α sorgt für eine Vergrößerung des Spurabstandes a. Durch Verschieben der beiden Elemente 4a, 4b nach außen kann somit ein größerer Grabenabstand auf der Solarzelle SZ realisiert werden. Der Winkel α kann beispielsweise dadurch geändert werden, dass (bei festgelegtem Abstrahlwinkel der -1.ten und der +1.ten Beugungsordnung relativ zur Achse H durch den Strahlteiler 3) der Abstand der beiden Elemente 4a, 3b vom Strahlteiler 3 geändert wird (Elemente 4a, 4b näher an den Strahlteiler 3 → kleiner Winkel α).

Damit der vorbeschriebene Einfall der Laserstrahlen L1, L2 über einen bestimmten α-Winkelbereich realisiert werden kann (bzw. damit die Laserstrahlen L1, L2 bei unterschiedlichen Positionen der Elemente 4a, 4b auf ein und denselben Kreuzungspunkt P im Raum zurück umgelenkt werden können), werden im vorliegenden Fall als Umlenkelemente 4a, 4b geeignet ausgebildete Keiloptiken oder Prismen verwendet, die drehbar angeordnet sind. Jede der Keiloptiken bzw. Prismen 4a, 4b ist dabei um eine Achse K senkrecht zur Hauptstrahlachse H und senkrecht zur Nebenachse N (also in z-Richtung) drehbar.

Die Keiloptiken/Prismen sind hier senkrecht zur optischen Achse zueinander und parallel zur optischen Achse miteinander beweglich.

Alternativ dazu ist es auch möglich, die Elemente 4a, 4b im Raum feststehend (also gegebenenfalls lediglich um die Achsen K drehbar) anzuordnen und die Verkleinerung oder Vergrößerung des Winkels α dadurch zu erzielen, dass der Abstand des Galvanoscanners 2 von den Umlenkelementen 4a, 4b (entlang der Hauptstrahlrichtung H gesehen) variabel ausgestaltet wird. Hierzu kann der Galvanoscanner 2 entlang der Hauptstrahlachse H verschieblich angeordnet sein. Alternativ dazu können natürlich auch die Elemente 4a, 4b und/oder der Strahlteiler 3 entlang der Hauptstrahlachse verschieblich ausgebildet sein.

Durch die variable Einstellung der Keiloptiken 4a, 4b zueinander können somit nahezu beliebige Spuren eingestellt werden. Wesentlich hierfür ist, dass sich die beiden Laserstrahlen L1, L2 immer zwischen den beiden beweglichen Ablenkspiegeln des Galvanoscanners 2 kreuzen (vgl. Figur 3).

Figur 2 zeigt ein weiteres Ausführungsbeispiel für eine erfindungsgemäße Laserbearbeitungsvorrichtung. Diese ist grundsätzlich ebenso so aufgebaut wie die Vorrichtung aus Figur 1, so dass nachfolgend nur die Unterschiede beschrieben werden. Wie die Figur 2 zeigt, werden bei dieser Vorrichtung insgesamt drei einzelne Laserstrahlen L1 bis L3 so ausgeformt und geführt, dass sich alle drei Laserstrahlen L1 bis L3 in dem gemeinsamen Punkt P kreuzen. Dies wird (siehe auch Fig. 3) einfach dadurch realisiert, dass im vorliegenden Fall auch (neben der -1.-ten Beugungsordnung/Strahl L1 und der +1.-ten Beugungsordnung/Strahl L2) die 0.-te Beugungsordnung als dritter Laserstrahl L3 genutzt wird. Hierbei verläuft die 0.-te Beugungsordnung bzw. der Laserstrahl L3 entlang der Hauptstrahlachse H und auf dieser, bevor sie/er im Galvoscanner 2 umgelenkt wird.

Auf dem Solarzellenelement SZ werden somit drei parallele Spuren L1, L2, L3 in konstanten Abständen zueinander erzeugt.

Figur 3 zeigt in einer dreidimensionalen Aufsicht (Figur 3 ganz rechts) sowie in drei unterschiedlichen Seitenansichten aus drei zueinander senkrechten Richtungen (Figur 3 links und Mitte) die wesentlichen Elemente des Galvanoscanners 2, der im Rahmen der vorliegenden Erfindung eingesetzt wird. Dies sind insgesamt drei Spiegel: Ein erster Ablenkspiegel AW, der fest im Raum angeordnet ist (also nicht drehbar ist), ein zweiter Ablenkspiegel, der erste bewegliche bzw. um eine Achse rotierbare Ablenkspiegel A1 und ein dritter Ablenkspiegel, der zweite bewegliche, um eine zweite Achse drehbare Ablenkspiegel A2. Der erste (feststehende) Ablenkspiegel AW dient hier lediglich dazu, die einfallenden Laserstrahlen L1 bis L3 (gezeigt sind nur die beiden Laserstrahlen L1 und L3 des Beispiels aus Figur 2, d.h. zur besseren Übersichtlichkeit ist der Strahl L2 nicht gezeigt) einmal aus der hier vertikal angeordneten Einfallsebene in die Horizontale umzulenken. Alle drei Laserstrahlen L1 bis L3 werden so auf den ersten Ablenkspiegel AW eingestrahlt, dass sie nach ihrer Reflexion an diesem auf den ersten beweglichen Ablenkspiegel A1 gestrahlt werden und dort erneut reflektiert werden, wobei sie sich dann alle in dem gemeinsamen Raumpunkt (Kreuzungspunkt P) genau zwischen den beiden beweglichen Ablenkspiegeln A1 und A2 kreuzen. Die am ersten beweglichen Ablenkspiegel A1 reflektierten Laserstrahlen L1 bis L3 kreuzen sich somit im Punkt P und fallen dann auf den zweiten beweglichen Ablenkspiegel A2 ein, wo sie erneut reflektiert werden. Die beiden Achsen der Ablenkspiegel A1 und A2 (Rotationsachsen der Spiegel) sind dabei senkrecht zueinander und beabstandet voneinander so angeordnet, dass die drei Laserstrahlen L1 bis L3 im Wesentlichen vertikal einfallen zwischen den Spiegeln AW und A1 im Wesentlichen in der Horizontalen verlaufen und vom Spiegel A1 im Wesentlichen in der Horizontalen umgelenkt werden, bevor sie vom zweiten beweglichen Ablenkspiegel A2 aus der Horizontalen wieder im Wesentlichen in die Vertikale umgelenkt werden und nach der Fokussierung auf die zu bearbeitende Solarzelle SZ treffen.

Figur 4 deutet schließlich zwei weitere Ausführungsformen an, in denen die vorliegende Erfindung realisiert werden kann. Beide dieser Ausführungsformen sind auf der Strahleingangsseite, d.h. bevor die Kreuzung der einzelnen Strahlen (hier gezeigt: Strahlen L1 und L2) im gemeinsamen Punkt P realisiert wird, anders aufgebaut als die in den Figuren 1 und 2 gezeigte Anordnung.

Im Gegensatz zu den ersten beiden Ausführungsbeispielen werden hier zwei einzelne Laser 1a und 1b verwendet, die in der ersten weiteren Ausführungsform beabstandet voneinander und entlang der Hauptstrahlrichtung H einstrahlen. Die beiden Laserstrahlen L1 und L2, die hier gezeigt sind, verlaufen somit beabstandet voneinander und von der Achse H und symmetrisch um letztere. Die beiden Keiloptiken bzw. Prismen 4a, 4b sind dann so angeordnet und ausgerichtet, dass die beiden Strahlen L1 und L2 zur Hauptstrahlachse hin umgelenkt werden, so dass sie sich im gemeinsamen Raumpunkt P treffen bzw. kreuzen. Diese Vorrichtung vermeidet somit den Einsatz eines Strahlteilers, es sind stattdessen jedoch zwei Laser einzusetzen. Sämtliche anderen Merkmale entsprechen denjenigen, die in Zusammenhang mit den Figuren 1 bis 3 bereits beschrieben wurden.

Damit auch hier die parallelen Spuren im gewünschten Abstand a erzeugt werden können, muss ebenfalls der Einfallswinkel α variierbar sein. Dies kann hier durch Auseinander- bzw. Zusammenbewegung der Umlenkelemente 4a, 4b entlang der Nebenachse N geschehen; die beiden Laser 1a bzw. 1b sind dann entsprechend zu verschieben oder zu verkippen.

In einer zweiten weiteren Ausgestaltungsform kann auf die beiden Strahlumlenkelemente 4a und 4b verzichtet werden (gestrichelte Strahlverläufe L1' und L2'). Die beiden Laser sind dann entsprechend so anzuordnen, dass ohne weitere Strahlumlenkung eine direkte Kreuzung der beiden Teilstrahlen L1' und L2' im Kreuzungspunkt P realisiert wird. Damit hier der entsprechende Winkelbereich α durchfahren werden kann, müssen dann die beiden Laser bewegbar und schwenkbar so angeordnet sein, dass sie sich z.B. entlang eines Halbkreises bewegen, wobei sie gleichzeitig so im Raum gedreht werden, dass ihre Strahlen sich weiterhin immer in dem gemeinsamen Punkt P kreuzen.

## Patentansprüche

1. Laserbearbeitungsvorrichtung zur Laserbearbeitung von Werkstücken, insbesondere von flächigen Solarzellenelementen (SZ), umfassend
eine Laserstrahlerzeugungs- und Führungseinheit (LF), mit der ein erster und ein zweiter Laserstrahl (L1, L2) erzeugbar ist, und
mit deren Hilfe die beiden Laserstrahlen (L1, L2) so führbar sind, dass sie sich in einem Kreuzungspunkt (P) im Raum kreuzen, und einen Galvanoscanner (2), **dadurch gekennzeichnet, dass**
dass der Galvoscanner (2) im Strahlengang der beiden Laserstrahlen (L1, L2) so angeordnet ist, dass der Kreuzungspunkt (P) genau in der Mitte zwischen den beiden beweglichen Ablenkspiegeln (A1, A2) des Galvoscanners (2) liegt.

2. Laserbearbeitungsvorrichtung nach dem vorhergehenden Anspruch,
***dadurch gekennzeichnet, dass***
die Laserstrahlerzeugungs- und Führungseinheit (LF) aufweist: einen Laser (1) mit einem im Strahlengang nach dem Laser angeordneten Strahlteiler (3), mit dem aus dem Laserstrahl des Lasers der erste und der zweite Laserstrahl (L1, L2) erzeugbar sind, und eine im Strahlengang nach dem Strahlteiler (3) angeordnete Strahlumlenkeinheit (4), mit der mindestens einer der beiden Laserstrahlen (L1, L2) zur Kreuzung mit dem anderen der beiden Laserstrahlen (L1, L2) im Kreuzungspunkt (P) umlenkbar ist.

3. Laserbearbeitungsvorrichtung nach Anspruch 1,
***dadurch gekennzeichnet, dass***
die Laserstrahlerzeugungs- und Führungseinheit (LF) aufweist: zwei Laser (1a, 1b) zur Erzeugung des ersten und des zweiten Laserstrahls (L1, L2), und eine Strahlumlenkeinheit (4), mit der mindestens einer der beiden Laserstrahlen (L1, L2) zur Kreuzung mit dem anderen der beiden Laserstrahlen (L1, L2) im Kreuzungspunkt (P) umlenkbar ist.

4. Laserbearbeitungsvorrichtung nach Anspruch 1,
***dadurch gekennzeichnet, dass***
die Laserstrahlerzeugungs- und Führungseinheit (LF) aufweist: zwei Laser (1a, 1b) zur Erzeugung des ersten und des zweiten Laserstrahls (L1, L2), wobei die beiden Laser so angeordnet und ausgerichtet sind, dass sich die beiden von ihnen erzeugbaren und/oder erzeugten Laserstrahlen (L1, L2) in dem Kreuzungspunkt (P) kreuzen.

5. Laserbearbeitungsvorrichtung nach einem der Ansprüche 2 oder 3,
sprüche 2 oder 3,
***dadurch gekennzeichnet*, *dass***
die Strahlumlenkeinheit (4) umfasst: ein erstes Strahlumlenkelement (4a), das so angeordnet und ausgerichtet ist, dass mit ihm der erste Laserstrahl (L1) zur Kreuzung mit dem zweiten Laserstrahl (L2) umlenkbar ist, und ein zweites Strahlumlenkelement (4b), das so angeordnet und ausgerichtet ist, dass mit ihm der zweite Laserstrahl (L2) zur Kreuzung mit dem ersten Laserstrahl (L1) umlenkbar ist.

6. Laserbearbeitungsvorrichtung vor-nach Anspruch 2,
***dadurch gekennzeichnet, dass***
der Strahlteiler (3) ein refraktiver Strahlteiler, insbesondere ein Prisma, oder ein diffraktiver Strahlteiler, insbesondere ein optisches Gitter, ist.

7. Laserbearbeitungsvorrichtung nach dem Anspruch 6,
***dadurch gekennzeichnet, dass***
der Laser (1), der diffraktive Strahlteiler (3) und die Strahlumlenkeinheit (4) so ausgebildet, angeordnet und ausgerichtet sind, dass die +1-te und die -1-te Beugungsordnung als die beiden Laserstrahlen (L1, L2) im Kreuzungspunkt (P) zur Kreuzung bringbar sind und/oder gebracht sind.

8. Laserbearbeitungsvorrichtung nach dem Anspruch 6,
***dadurch gekennzeichnet, dass***
der Laser (1), der diffraktive Strahlteiler (3) und die Strahlumlenkeinheit (4) so ausgebildet, angeordnet und ausgerichtet sind, dass insgesamt drei Laserstrahlen (L1, L2, L3) in Form der +1-ten, der -1-ten und der 0-ten Beugungsordnung als Laserstrahlen (L1, L2, L3) im Kreuzungspunkt (P) zur Kreuzung bringbar sind und/oder gebracht sind.

9. Laserbearbeitungsvorrichtung nach Anspruch 2 und 5,
***dadurch gekennzeichnet, dass***
der Laser (1), der Strahlteiler (3) und der Galvoscanner (2) im Wesentlichen entlang einer ersten Achse (Hauptstrahlachse H) angeordnet sind und dass die beiden Strahlumlenkelemente (4a, 4b) zwischen dem Strahlteiler (3) und dem Galvoscanner (2) entlang einer zweiten Achse (Nebenachse N) senkrecht zur Hauptstrahlachse (H) angeordnet sind.

10. Laserbearbeitungsvorrichtung nach dem vorhergehenden Anspruch,
***dadurch gekennzeichnet, dass***
die beiden Strahlumlenkelemente (4a, 4b) in Richtung der Nebenachse (N) gesehen gegeneinander translatorisch verschiebbar sind
und/oder
dass die beiden Strahlumlenkelemente (4a, 4b) um dritte Achsen (Kippachsen K) senkrecht zur Hauptstrahlachse (H) und senkrecht zur Nebenachse (N) drehbar und/oder kippbar sind
und/oder
dass der Strahlteiler (3), der Galvoscanner (2) und/oder die beiden Strahlumlenkelemente (4a, 4b) in Richtung der Hauptstrahlachse (H) verschieblich angeordnet sind.

11. Laserbearbeitungsvorrichtung nach einem der vorhergehenden Ansprüche,
***gekennzeichnet durch***
eine mindestens eine Keiloptik und/oder mindestens ein Prisma umfassende Strahlumlenkeinheit (4) und/oder **durch** ein mindestens eine Keiloptik und/oder mindestens ein Prisma umfassendes Strahlumlenkelement (4a, 4b).

12. Laserbearbeitungsvorrichtung nach einem der vorhergehenden Ansprüche,
***gekennzeichnet durch***
genau einen Galvoscanner (2).

13. Laserbearbeitungsverfahren zur Laserbearbeitung von Werkstücken, insbesondere von flächigen Solarzellenelementen (SZ), wobei
mit Hilfe einer Laserstrahlerzeugungs- und Führungseinheit (LF) ein erster und ein zweiter Laserstrahl (L1, L2) erzeugt werden und
wobei ein Galvanoscanner (2) im Strahlengang der beiden Laserstrahlen (L1, L2) angeordnet wird,
wobei die beiden Laserstrahlen (L1, L2) mit Hilfe der Laserstrahlerzeugungs- und Führungseinheit (LF) so geführt werden, dass die beiden Laserstrahlen (L1, L2) sich in einem Kreuzungspunkt (P) im Raum kreuzen, und **dadurch gekennzeichnet,**
**dass** der Galvoscanner (2) im Strahlengang der beiden Laserstrahlen (L1, L2) so angeordnet wird, dass der Kreuzungspunkt (P) genau in der Mitte zwischen den beiden beweglichen Ablenkspiegeln (A1, A2) des Galvoscanners ausgebildet wird.

14. Laserbearbeitungsverfahren nach dem Anspruch 13,
***dadurch gekennzeichnet, dass***
eine Laserbearbeitungsvorrichtung nach einem der vorhergehenden Vorrichtungsansprüche zur Strahlerzeugung und Strahlführung eingesetzt wird.

15. Verwendung einer Laserbearbeitungsvorrichtung oder eines Laserbearbeitungsverfahrens nach einem der vorhergehenden Ansprüche zur Laserbearbeitung von dünnen Werkstücken oder Substraten, insbesondere zur Bearbeitung von Solarzellen oder von Ausgangssubstraten für die Herstellung von Solarzellen, insbesondere von Dünnschichtsolarzellen und/oder kristallinen Si-Solarzellen.

## Claims

1. Laser processing device for laser processing of workpieces, in particular of planar solar cell elements (SZ), comprising
a laser beam generation- and guidance unit (LF) with which a first and a second laser beam (L1, L2) can be produced, and
with the help of which the two laser beams (L1, L2) can be guided such that they intersect at an intersection point (P) in space, and
a galvano scanner (2),
**characterised in that**
the galvo scanner (2) is disposed in the beam path of the two laser beams (L1, L2) such that the intersection point (P) is situated precisely in the middle between the two moveable deflection mirrors (A1, A2) of the galvo scanner (2).

2. Laser processing device according to the preceding claim,
***characterised in that***
the laser beam generation- and guidance unit (LF) comprises: a laser (1) with a beam splitter (3) which is disposed in the beam path after the laser and with which the first and the second laser beam (L1, L2) can be generated from the laser beam of the laser, and a beam deflection unit (4) which is disposed in the beam path after the beam splitter (3) and with which at least one of the two laser beams (L1 L2) can be deflected in order to intersect the other of the two laser beams (L1, L2) at the intersection point (P).

3. Laser processing device according to claim 1,
***characterised in that***
the laser beam generation- and guidance unit (LF) comprises: two lasers (1a, 1b) for generating the first and the second laser beam (L1, L2), and a beam deflection unit (4) with which at least one of the two laser beams (L1, L2) can be deflected in order to intersect the other of the two laser beams (L1, L2) at the intersection point (P).

4. Laser processing device according to claim 1,
***characterised in that***
the laser beam generation- and guidance unit (LF) comprises: two lasers (1a, 1b) for generating the first and the second laser beam (L1, L2), the two lasers being disposed and orientated such that the two laser beams (L1, L2) which can be produced and/or are produced by them intersect at the intersection point (P).

5. Laser processing device according to one of claims 2 or 3,
***characterised in that***
the beam deflection unit (4) comprises: a first beam deflection element (4a) which is disposed and orientated such that, with it, the first laser beam (L1) can be deflected in order to intersect the second laser beam (L2), and a second beam deflection element (4b) which is disposed and orientated such that, with it, the second laser beam (L2) can be deflected in order to intersect the first laser beam (L1).

6. Laser processing device according to claim 2,
***characterised in that***
the beam splitter (3) is a refractive beam splitter, in particular a prism, or a diffractive beam splitter, in particular an optical grating.

7. Laser processing device according to claim 6,
***characterised in that***
the laser (1), the diffractive beam splitter (3) and the beam deflection unit (4) are configured, disposed and orientated such that the + 1^{st} and the -1^{st} diffraction order can be brought and/or are brought to intersect as the two laser beams (L1, L2) at the intersection point (P).

8. Laser processing device according to claim 6,
***characterised in that***
the laser (1), the diffractive beam splitter (3) and the beam deflection unit (4) are configured, disposed and orientated such that in total three laser beams (L1, L2, L3) in the form of the + 1^{st}, the -1^{st} and the 0^{th} diffraction order can be brought and/or are brought to intersect as laser beams (L1, L2, L3) at the intersection point (P).

9. Laser processing device according to claim 2 and 5,
***characterised in that***
the laser (1), the beam splitter (3) and the galvo scanner (2) are disposed essentially along a first axis (main beam axis H) and **in that** the two beam deflection elements (4a, 4b) are disposed between the beam splitter (3) and the galvo scanner (2) along a second axis (subsidiary axis N) perpendicular to the main beam axis (H).

10. Laser processing device according to the preceding claim,
***characterised in that***
the two beam deflection elements (4a, 4b) can be displaced in translation relative to each other, viewed in the direction of the subsidiary axis (N)
and/or
**in that** the two beam deflection elements (4a, 4b) can be rotated and/or tilted about third axes (tilt axes K) perpendicular to the main beam axis (H) and perpendicular to the subsidiary axis (N)
and/or
**in that** the beam splitter (3), the galvo scanner (2) and/or the two beam deflection elements (4a, 4b) are disposed displaceably in the direction of the main beam axis (H).

11. Laser processing device according to one of the preceding claims,
***characterised by***
a beam deflection unit (4) which comprises at least one wedge lens system and/or at least one prism and/or by a beam deflection element (4a, 4b) which comprises at least one wedge lens system and/or at least one prism.

12. Laser processing device according to one of the preceding claims,
***characterised by***
precisely one galvo scanner (2).

13. Laser processing method for laser processing of workpieces, in particular of planar solar cell elements (SZ),
a first and a second laser beam (L1, L2) being generated with the help of a laser beam generation- and guidance unit (LF) and
a galvano scanner (2) being disposed in the beam path of the two laser beams (L1, L2),
the two laser beams (L1, L2) being guided with the help of the laser beam generation- and guidance unit (LF) such that the two laser beams (L1, L2) intersect at an intersection point (P) in space,
and
**characterised in that**
the galvo scanner (2) is disposed in the beam path of the two laser beams (L1, L2) such that the intersection point (P) is generated precisely in the middle between the two moveable deflection mirrors (A1, A2) of the galvo scanner.

14. Laser processing method according to claim 13,
***characterised in that***
a laser processing device according to one of the preceding device claims is used for beam production and beam guidance.

15. Use of a laser processing device or of a laser processing method according to one of the preceding claims for laser processing of thin workpieces or substrates, in particular for processing solar cells or precursor substrates for the production of solar cells, in particular of thin-film solar cells and/or crystalline Si solar cells.

## Revendications

1. Dispositif de traitement à laser pour le traitement au laser de pièces, en particulier d'éléments plans de piles solaires (SZ), comprenant :
une unité de génération et de guidage de rayons laser (LF), avec laquelle peuvent être générés un premier et un deuxième rayon laser (L1, L2), et
à l'aide de laquelle les deux rayons laser (L1, L2) peuvent être guidés de sorte qu'ils se croisent en un point de croisement (P) de l'espace, et
un galvanoscanneur (2),
**caractérisé en ce que**
le galvanoscanneur (2) est agencé sur la trajectoire des deux rayons laser (L1, L2) de sorte que le point de croisement (P) se trouve exactement au milieu entre les deux miroirs de déviation (A1, A2) mobiles du galvanoscanneur (2).

2. Dispositif de traitement à laser selon la revendication précédente, **caractérisé en ce que**
l'unité de génération et de guidage de rayons laser (LF) comporte un laser (1) doté d'un diviseur de rayonnement (3) agencé sur la trajectoire des rayons après le laser, lequel diviseur permet de générer le premier et le deuxième rayon laser (L1, L2) à partir du rayon du laser, et une unité de déviation de rayons (4) agencée après le diviseur de rayonnement (3) sur la trajectoire des rayons, laquelle unité permet de dévier au moins l'un des deux rayons laser (L1, L2) pour un croisement avec l'autre rayon laser (L1, L2) au point de croisement (P).

3. Dispositif de traitement à laser selon la revendication 1,
**caractérisé en ce que**
l'unité de génération et de guidage de rayons laser (LF) comporte deux lasers (1a, 1b) pour générer le premier et le deuxième rayon laser (L1, L2) et une unité de déviation de rayons (4), qui permet de dévier au moins l'un des deux rayons laser (L1, L2) pour un croisement avec l'autre rayon laser (L1, L2) au point de croisement (P).

4. Dispositif de traitement à laser selon la revendication 1,
**caractérisé en ce que**
l'unité de génération et de guidage de rayons laser (LF) comporte deux lasers (1a, 1b) pour générer le premier et le deuxième rayon laser (L1, L2), dans lequel les deux lasers sont agencés et orientés de sorte que les deux rayons laser (L1, L2) générés et/ou pouvant être générés par ceux-ci se croisent au point de croisement (P).

5. Dispositif de traitement à laser selon les revendications 2 ou 3, **caractérisé en ce que**
l'unité de déviation de rayons (4) comprend un premier élément de déviation de rayons (4a) qui est agencé et orienté de sorte qu'avec lui, le premier rayon laser (L1) peut être dévié pour croiser le deuxième rayon laser (L2), et un second élément de déviation de rayons (4b) qui est agencé et orienté de sorte qu'avec lui, le deuxième rayon laser (L2) peut être dévié pour croiser le premier rayon laser (L1).

6. Dispositif de traitement à laser selon la revendication 2,
**caractérisé en ce que**
le diviseur de rayonnement (3) est un diviseur de rayonnement à réfraction, en particulier un prisme, ou un diviseur de rayonnement à diffraction, en particulier un réseau optique.

7. Dispositif de traitement à laser selon la revendication 6,
**caractérisé en ce que**
le laser (1), le diviseur de rayonnement à diffraction (3) et l'unité de déviation de rayons (4) sont réalisés, agencés et orientés de sorte que le + 1^{ème} et le -1^{éme} ordre de diffraction en tant que les deux rayons laser (L1, L2) peuvent être amenés et/ou apportés au point de croisement (P) pour se croiser.

8. Dispositif de traitement à laser selon la revendication 6,
**caractérisé en ce que**
le laser (1), le diviseur de rayonnement à diffraction (3) et l'unité de déviation de rayons (4) sont réalisés, agencés et orientés de sorte que, au total, trois rayons laser (L1, L2, L3) peuvent être amenés et/ou apportés sous la forme du + 1^{ème}, du -1^{ème} et du 0^{ème} ordre de diffraction en tant que rayons laser (L1, L2, L3) au point de croisement (P) pour se croiser.

9. Dispositif de traitement à laser selon les revendications 2 et 5, **caractérisé en ce que**
le laser (1), le diviseur de rayonnement (3) et le galvanoscanneur (2) sont agencés sensiblement le long d'un premier axe (axe du rayon principal H) et **en ce que** les deux éléments de déviation de rayons (4a, 4b) sont agencés entre le diviseur de rayonnement (3) et le galvanoscanneur (2), le long d'un second axe (axe secondaire N) et perpendiculairement à l'axe du rayon principal (H).

10. Dispositif de traitement à laser selon la revendication précédente, **caractérisé en ce que**
les deux éléments de déviation de rayons (4a, 4b), observés dans la direction de l'axe secondaire (N), peuvent être déplacés l'un par rapport à l'autre par translation
et/ou
les deux éléments de déviation de rayons (4a, 4b) peuvent être soumis à une rotation et/ou à un pivotement autour d'un troisième axe (axe de pivotement K) perpendiculairement à l'axe du rayon principal (H) et perpendiculairement à l'axe secondaire (N)
et/ou
le diviseur de rayonnement (3), le galvanoscanneur (2) et/ou les deux éléments de déviation de rayons (4a, 4b) sont agencés de manière à pouvoir être déplacés dans la direction de l'axe du rayon principal (H).

11. Dispositif de traitement à laser selon l'une quelconque des revendications précédentes,
**caractérisé par**
une unité de déviation de rayons (4) comportant au moins une optique cunéiforme et/ou au moins un prisme, et/ou par un élément de déviation de rayons (4a, 4b) comportant au moins une optique cunéiforme et/ou au moins un prisme.

12. Dispositif de traitement à laser selon l'une quelconque des revendications précédentes,
**caractérisé par**
exactement un galvanoscanneur (2).

13. Procédé de traitement à laser pour le traitement au laser de pièces, en particulier d'éléments plans de piles solaires (SZ), dans lequel :
un premier et un deuxième rayon laser (L1, L2) sont générés à l'aide d'une unité de génération et de guidage de rayons laser (LF), et
dans lequel un galvanoscanneur (2 est agencé sur la trajectoire des deux rayons laser (L1, L2),
dans lequel les deux rayons laser (L1, L2) sont guidés à l'aide de l'unité de génération et de guidage de rayons laser (LF) de sorte qu'ils se croisent en un point de croisement (P) de l'espace,
**caractérisé en ce que**
le galvanoscanneur (2) est agencé sur la trajectoire des deux rayons laser (L1, L2) de sorte que le point de croisement (P) se trouve exactement au milieu entre les deux miroirs de déviation (A1, A2) mobiles du galvanoscanneur.

14. Procédé de traitement au laser selon la revendication 13,
**caractérisé en ce que**
l'on utilise un dispositif de traitement à laser selon l'une quelconque des revendications précédentes pour la génération et le guidage de rayons.

15. Utilisation d'un dispositif de traitement à laser ou d'un procédé de traitement au laser selon l'une quelconque des revendications précédentes pour le traitement au laser de pièces ou de substrats minces, en particulier pour le traitement de piles solaires ou de substrats de départ pour la fabrication de piles solaires, en particulier de piles solaires à couche mince et /ou de piles solaires de Si cristallin.
